(19) Europäisches Patentamt
European Patent Office
Office européen des brevets

(11) **EP 4 217 681 B1**

(12) **FASCICULE DE BREVET EUROPEEN**

(45) Date de publication et mention de la délivrance du brevet:
**10.07.2024 Bulletin 2024/28**

(21) Numéro de dépôt: **21783480.3**

(22) Date de dépôt: **24.09.2021**

(51) Classification Internationale des Brevets (IPC):
**G01C 21/20** (2006.01)  **G01S 7/48** (2006.01)
**G01S 17/06** (2006.01)  G01S 19/48 (2010.01)

(52) Classification Coopérative des Brevets (CPC):
**G01C 21/20; G01S 7/4808; G01S 17/06;**
G01S 19/485

(86) Numéro de dépôt international:
**PCT/EP2021/076408**

(87) Numéro de publication internationale:
**WO 2022/064008 (31.03.2022 Gazette 2022/13)**

(54) **PROCÉDÉ DE RECALAGE SUR UNE PLURALITÉ D'AMERS, PRODUIT PROGRAMME D'ORDINATEUR ET DISPOSITIF DE RECALAGE ASSOCIÉS**

VERFAHREN ZUR AKTUALISIERUNG EINER VIELZAHL VON LANDMARKEN UND ZUGEHÖRIGES COMPUTERPROGRAMMPRODUKT UND AKTUALISIERUNGSVORRICHTUNG

METHOD FOR UPDATING A PLURALITY OF LANDMARKS, AND ASSOCIATED COMPUTER PROGRAM PRODUCT AND UPDATING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.09.2020 FR 2009760**

(43) Date de publication de la demande:
**02.08.2023 Bulletin 2023/31**

(73) Titulaire: **THALES**
**92400 Courbevoie (FR)**

(72) Inventeur: **HEURGUIER, Dominique**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**FR-A1- 3 041 769**

• **JIAZHEN LU ET AL: "Backtracking scheme for single-point self-calibration and rapid in-motion alignment with application to a position and azimuth determining system", MEASUREMENT SCIENCE AND TECHNOLOGY, IOP, BRISTOL, GB, vol. 30, no. 1, 29 November 2018 (2018-11-29), pages 15102, XP020333185, ISSN: 0957-0233, [retrieved on 20181129], DOI: 10.1088/1361-6501/AAE918**

**Description**

La présente invention concerne un procédé de recalage sur une pluralité d'amers.

La présente invention concerne également un produit programme d'ordinateur et un dispositif de recalage associés à ce procédé de recalage.

Plus particulièrement, l'invention est applicable lors de la géolocalisation d'un dispositif mobile, notamment d'un engin mobile tel qu'un véhicule ou un aéronef, à l'aide des amers.

Par « amer », on entend tout objet naturel ou artificiel repérable par le dispositif mobile et dont la position est connue ou déterminable.

Selon des méthodes déjà connues dans l'état de la technique, il est possible de géolocaliser un dispositif mobile ou de recaler sa position déterminée par un autre moyen, en utilisant une pluralité d'amers. Un exemple d'utilisation des amers est décrit par exemple dans Jiazhen Lu et Al: « Backtracking scheme for single-point self-calibration and rapid in-motion alignment with application to a position and azimuth determining System ».

Pour ce faire, le dispositif mobile est généralement apte à mesurer des directions (azimuts ou gisements) par rapport aux amers et/ou des distances jusqu'à ceux-ci. Ainsi, en analysant ces mesures et les positions connues des amers, il est possible généralement de déterminer ou de préciser la position du dispositif mobile.

Les méthodes de géolocalisation par amers restent ainsi utilisables lorsque par exemple la géolocalisation par un système GNSS (de l'anglais « Global Navigation Satellite System ») est difficile ou non-souhaitable, ou lorsque par exemple il est nécessaire de déterminer la position du dispositif mobile en utilisant plusieurs sources redondantes. En outre, en cas d'utilisation par exemple des mesures inertielles pour géolocaliser le dispositif mobile, il est possible de recaler ces mesures en utilisant la géolocalisation par amers.

Pour effectuer un recalage sur les amers selon les méthodes existantes, les mesures de visée par rapport à ces amers doivent généralement être prises lorsque le dispositif mobile est à l'arrêt.

On conçoit alors que cela impose de nombreuses contraintes sur l'utilisation de ces méthodes ou les rend parfois inutilisables, lorsque l'arrêt du dispositif mobile n'est pas souhaitable ou n'est pas possible. Cela est notamment le cas de certains types de véhicule ou de missions dans lesquelles ces véhicules sont utilisables.

La présente invention a pour but de proposer une méthode permettant d'effectuer un recalage sur amers d'un dispositif mobile lors de son déplacement, sans nécessité de prise des mesures à l'arrêt.

À cet effet, l'invention a pour objet un procédé de recalage conforme à la revendication 1.

Suivant d'autres aspects avantageux de l'invention, le procédé comprend des caractéristiques des revendications 2 à 7.

La présente invention a également pour objet un produit programme d'ordinateur comportant des instructions logicielles qui, lorsque mises en oeuvre par un équipement informatique, mettent en oeuvre le procédé tel que défini précédemment.

La présente invention a également pour objet un dispositif de recalage sur une pluralité d'amers lors de la géolocalisation d'un dispositif mobile, comprenant des moyens techniques adaptés pour mettre en oeuvre le procédé tel que défini précédemment.

Ces caractéristiques et avantages de l'invention apparaitront à la lecture de la description qui va suivre, donnée uniquement à titre d'exemple non limitatif, et faite en référence aux dessins annexés, sur lesquels :

- [Fig 1] la figure 1 est une vue schématique d'un dispositif de recalage selon l'invention ;
- [Fig 2] la figure 2 est un organigramme d'un procédé recalage selon l'invention, le procédé étant mis en oeuvre par le dispositif de recalage de la figure 1 ; et
- [Fig 3] la figure 3 est une vue schématique illustrant la mise en oeuvre de l'une des étapes du procédé de la figure 2.

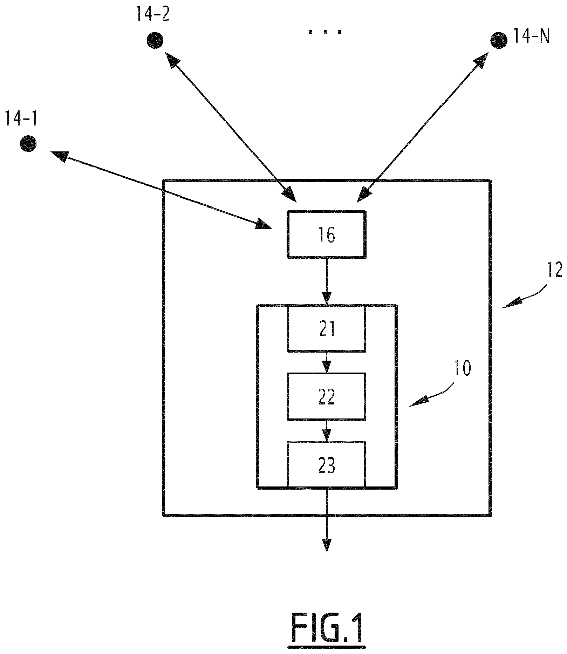

On a en effet représenté sur la figure 1, un dispositif de recalage 10 selon l'invention apte à déterminer ou à préciser la position d'un dispositif mobile 12 à chaque instant. Le dispositif mobile 12 est apte à se déplacer par exemple selon deux ou trois degrés de liberté par exemple dans un repère terrestre.

Selon un exemple de réalisation, le dispositif mobile 12 est un engin mobile, tel que par exemple un véhicule terrestre ou un aéronef, embarquant le dispositif de recalage 10. Dans le cas d'un aéronef, il peut s'agir d'un avion ou d'un hélicoptère pilotable par un opérateur et/ou par un système avionique à partir de celui-ci, ou d'un drone pilotable à partir d'un centre de contrôle distant par un opérateur et/ou par un système avionique adapté.

Selon un autre exemple de réalisation, le dispositif mobile 12 est porté par un opérateur ou par tout autre utilisateur et présente par exemple un téléphone portable. Dans ce cas, le dispositif de recalage 10 est par exemple intégré dans le dispositif mobile 12.

Le dispositif de recalage 10 est apte à déterminer la position du dispositif mobile 12 en utilisant des mesures de visée prises par rapport aux amers 14-1,...,14-N par au moins certains des capteurs d'une pluralité de capteurs 16.

Chaque amer 14-1,...,14-N présente un objet naturel ou artificiel disposé par exemple de manière fixe sur la surface terrestre selon une position connue avec une précision également connue et repérable depuis le dispositif mobile 12. Ainsi, chaque amer présente par exemple un pylône, une éolienne, un phare, un bâtiment, une montagne, un rocher, etc.

Chaque amer 14-1,...,14-N est par exemple identifiable par un identifiant qui lui est propre. En outre, selon un mode de réalisation particulier de l'invention, l'identifiant de chaque amer 14-1,...,14-N permet d'obtenir sa position en utilisant par exemple une base de données de positions prévue à cet effet. Une telle base de données peut être publiquement accessible ou alors, présenter un accès restreint.

Au moins certains des capteurs 16 sont aptes à déterminer des mesures de visée en relation avec chacun des amers 14-1,...,14-N.

Avantageusement selon l'invention, chaque mesure de visée déterminée par les capteurs 16 correspondants correspond à une mesure de direction ou à une mesure de distance.

Chaque mesure de direction correspond à une mesure d'azimut ou à une mesure de site ou à une mesure de gisement relative à l'un des amers 14-1,...,14-N. Une telle mesure est par exemple déterminée par l'un des capteurs 16 en utilisant des mesures optiques et dans le cas d'une mesure d'azimut, en comparant ces mesures avec le cap du dispositif mobile 12 ou avec une direction fixe dans l'espace.

Chaque mesure de visée correspond à une mesure de distance entre le dispositif mobile 12 et l'un des amers 14-1,...,14-N. Une telle mesure est réalisée par l'un des capteurs 16 comprenant par exemple un radar ou un laser ou tout autre dispositif de télémétrie connu en soi.

Au moins un des capteurs 16 est apte à déterminer une mesure de vitesse du dispositif mobile 12. Ce capteur présente par exemple une centrale inertielle ou tout autre capteur adapté.

Comme cela est visible sur la figure 1, le dispositif de recalage 10 comprend un module d'entrée 21, un module de calcul 22 et un module de sortie 23.

Le module d'entrée 21 est connecté aux capteurs 16 et est apte à acquérir l'ensemble des mesures déterminées par ces capteurs 16.

Le module de calcul 22 est apte à analyser les données acquises par le module d'entrée 21 afin de fournir un résultat déterminant ou précisant la position du dispositif mobile 12.

Enfin, le module de sortie 23 est apte à fournir le résultat déterminé par le module de calcul 22 à tout système intéressé. Par exemple, le module de sortie 23 est apte à fournir à un écran d'affichage la position déterminée du dispositif mobile 12 pour l'afficher. Selon un autre exemple, le module de sortie 23 est apte à fournir cette position par exemple à un dispositif de précision apte à comparer cette position avec celle fournie par exemple par un système de géolocalisation de type GNSS, afin de fournir une position précisée.

Chacun des modules 21 à 23 se présente par exemple sous la forme d'un logiciel mis en oeuvre par un processeur adapté. En variante, au moins l'un de ces modules 21 à 23 se présente au moins partiellement sous la forme d'un circuit logique programmable, tel qu'un circuit de type FPGA (de l'anglais « Field Programmable Gate Array »).

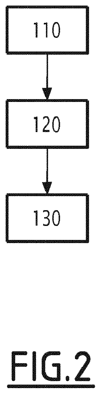

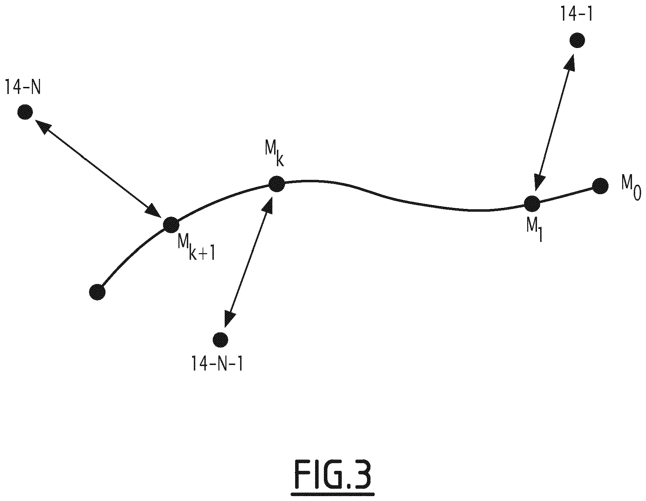

Le procédé de recalage sera désormais expliqué en référence à la figure 2 présentant un organigramme de ses étapes et à la figure 3 illustrant la mise en oeuvre d'au moins certaines des étapes.

Initialement, il est considéré que le dispositif mobile se déplace à proximité des amers 14-1, ..., 14-N selon les positions $M_{k+1}$, $M_k$, ..., $M_0$, visibles sur la figure 3. Il est également considéré que la position $M_{k+1}$ correspond à la position la plus ancienne du dispositif mobile 12 et la position $M_0$ correspond à la position la plus récente du dispositif mobile 12. Par la suite, les positions $M_{k+1}$, ..., $M_1$ seront appelées positions intermédiaires et la position $M_0$ sera appelée dernière position.

Il est considéré en outre que les positions $M_{k+1}$, $M_k$, ..., $M_0$ correspondent à des positions successives du dispositif mobile 12 à l'issu d'un même intervalle temporel. Cet intervalle temporel est appelé par la suite valeur d'échantillonnage $\delta$.

Dans l'exemple décrit, chaque position $M_{k+1}$, $M_k$, ..., $M_0$ se présente par exemple sous la forme d'un vecteur bidimensionnel. Pour chacune de ces positions, il est possible de définir un vecteur d'état $X_i$ ($0 \leq i \leq k + 1$) composé de cordonnées $x,y$ du dispositif mobile 12 dans cette position et de la vitesse $x',y'$ du dispositif mobile 12 dans cette position.

Lors de l'étape 110, mise en oeuvre dans chaque position intermédiaire $M_{k+1}$, ..., $M_1$, le module d'entrée 21 acquiert au moins une mesure de visée relative à l'un des amers 14-1, ..., 14-N et une mesure de vitesse en utilisant les capteurs 16. L'ensemble de ces mesures sont ensuite transmises au module de calcul 22.

L'étape suivante 120 est mise en oeuvre lorsque le dispositif mobile 12 est dans la dernière position $M_0$.

Lors de cette étape 120, le module de calcul 22 détermine une position différentielle $x_i$ pour chaque position intermédiaire $M_{k+1}$, ..., $M_1$ par rapport à la dernière position $M_0$. En particulier, chaque position différentielle $x_i$ correspond à la différence de la position intermédiaire $M_i$ et la dernière position $M_0$. Autrement dit, $x_i = M_i - M_0$.

Dans l'exemple décrit, chaque position différentielle $x_i$ est déterminée en appliquant un filtre de Kalman de façon rétrograde à partir de la dernière position $M_0$. Ce filtre de Kalman correspond par exemple à un modèle de vitesse sensiblement constante utilisant un bruit d'accélération instantanée gaussien centré. Ce modèle est connu sous le terme anglais de « Nearly Constant Velocity » ou « NCV ».

Selon ce modèle, le vecteur d'état $X_{i+1}$ pour chaque position suivante peut être exprimé via le vecteur d'état $X_i$ de la position précédente, une matrice d'évolution $A_k$ et un bruit de modèle $\varepsilon_{xk}$, appelé également bruit de position ou incertitude associée à la position différentielle $x_k$, en utilisant la relation suivante :

$$X_{k+1} = A_k X_k + \varepsilon_{xk}.$$

Comme indiqué précédemment, chaque vecteur d'état comprend la vitesse et la position du dispositif mobile 12 dans la position correspondante. Cette vitesse peut alors être estimée par la mesure de vitesse correspondante.

Dans le cas bidimensionnel, la matrice d'évolution $A_k$ et la matrice de covariance $E[\varepsilon_{xk}\varepsilon'_{xk}]$ du bruit de modèle $\varepsilon_{xk}$ prennent respectivement les formes suivantes :

$$A_k = \begin{bmatrix} 1 & -\delta & 0 & 0 \\ 0 & 1 & 0 & 0 \\ 0 & 0 & 1 & -\delta \\ 0 & 0 & 0 & 1 \end{bmatrix},$$

$$E[\varepsilon_{xk}\varepsilon'_{xk}] = \begin{bmatrix} \dfrac{q\delta^3}{3} & \dfrac{q\delta^2}{2} & 0 & 0 \\ \dfrac{q\delta^2}{2} & q\delta & 0 & 0 \\ 0 & 0 & \dfrac{q\delta^3}{3} & \dfrac{q\delta^2}{2} \\ 0 & 0 & \dfrac{q\delta^2}{2} & q\delta \end{bmatrix}.$$

Par la suite, l'estimation de chaque position différentielle $x_i$ obtenue lors de cette étape sera dénotée $\hat{x}_i$.

Lors de l'étape 130 suivante, le module de calcul 22 détermine la dernière position $M_0$ à partir des positions différentielles $\hat{x}_i$, des mesures de visée et des incertitudes associées à ces positions différentielles, en utilisant une fonction d'observation prédéterminée $h$.

En particulier, en fonction du type de mesure de visée considéré, la fonction d'observation $h(x)$ est choisie de sorte que sa valeur dans la position $x$ du dispositif mobile 12 soit égale à une mesure de visée théorique qui serait obtenue en absence de bruit.

Autrement dit, la fonction d'observation $h$ relie la position $M_i = \hat{x}_i + M_0$ du dispositif mobile 12 à la mesure de visée $m_i$ prise dans cette position via la relation suivante :

$$m_i = h(\hat{x}_i + M_0 + \varepsilon_{xi}) + \varepsilon_{mi},$$

où

$\varepsilon_{xi}$ est le bruit de position tel que défini précédemment; et
$\varepsilon_{mi}$ est le bruit de mesure.

Cette dernière relation peut être linéarisée sous la forme suivante :

$$m_i \approx h(\hat{x}_i + \widehat{M}_0) + \left( \frac{\partial h}{\partial x}\bigg|_{\hat{x}_i + \widehat{M}_0} \right)(M_i - \widehat{M}_0 + \varepsilon_{xi}) + \varepsilon_{mi}$$

où
$\widehat{M}_0$ est une première estimation de la dernière position $M_0$ qui peut être choisie aléatoirement ou correspondre à la dernière position connue du dispositif mobile 12 ou déterminée par une heuristique quelconque.

Il est possible de déterminer pour cette dernière relation une covariance globale $\Gamma_i$ sur la mesure de visée $m_i$ avec l'expression suivante :

$$\Gamma_i = \left(\frac{\partial h}{\partial x}\Big|_{\hat{x}_i + \hat{M}_0}\right)\Gamma_{x_i}\left(\frac{\partial h}{\partial x}\Big|_{\hat{x}_i + \hat{M}_0}\right)^t + \Gamma_{m_i},$$

où :

$\Gamma_{x_i}$ est la matrice de covariance du bruit de position $\varepsilon_{xi}$

$$\Gamma_{x_i} = E\big((\hat{x}_i - x_i)(\hat{x}_i - x_i)^t\big),$$

$\Gamma_{m_i}$ est la matrice de covariance du bruit de mesure $\varepsilon_{mi}$

$$\Gamma_{m_i} = E\big((m_i - E(m_i))(m_i - E(m_i))^t\big).$$

La dernière position $M_0$ du dispositif mobile 12 est alors obtenue en utilisant un estimateur du maximum de vraisemblance exploitant l'ensemble des mesures et leur covariance globale. En particulier, pour déterminer la dernière position $M_0$, il est possible d'appliquer un algorithme de type Gauss-Newton au critère des moindres carrés suivant, portant sur l'ensemble des mesures de visée :

$$Q(M_0) = \sum_i [m_i - h(M_0, x_i)]^t \Gamma_i^{-1} [m_i - h(M_0, x_i)].$$

À la fin de cette étape 130, le module de calcul 22 transmet la dernière position $M_0$ au module de sortie 23 qui la transmet à tout système intéressé.

Par la suite, le procédé selon l'invention peut être réitéré au fur et à mesure de l'avancement du dispositif mobile 12. Dans ces cas, à chaque itération du procédé, sa dernière position correspondra à la position du dispositif mobile au moment de la mise en oeuvre de l'étape 120. Ainsi, à chaque itération du procédé, la trajectoire du dispositif mobile peut être recalée par rapport aux amers.

On conçoit alors que la présente invention présente un certain nombre d'avantages. Tout d'abord, selon l'invention, le recalage sur les amers peut être effectué au fur et à mesure du déplacement du dispositif mobile, aucun arrêt n'est nécessaire pour le faire.

Pour cela, outre les mesures de visée prises par rapport aux amers, seulement des mesures de vitesse du dispositif mobile sont nécessaires.

Enfin, le recalage s'effectue en prenant en compte les bruits de mesure ce qui le rend particulièrement précis.

## Revendications

1. Procédé de recalage sur une pluralité d'amers (14-1, ..., 14-N) lors de la géolocalisation d'un dispositif mobile (12) se déplaçant selon une pluralité de positions ($M_{k+1}$, $M_k$, ..., $M_0$), la pluralité de positions ($M_{k+1}$, $M_k$, ..., $M_0$) comprenant une pluralité de positions intermédiaires ($M_{k+1}$, ..., $M_1$), le procédé comprenant les étapes suivantes :

- dans chaque position intermédiaire ($M_{k+1}$, ..., $M_1$) du dispositif mobile (12), acquisition (110) d'au moins une mesure de visée ($m_i$) relative à l'un des amers (14-1, ..., 14-N) et d'une mesure de vitesse du dispositif mobile (12) dans cette position ;
- dans une position, dite dernière position ($M_0$), postérieure à chacune des positions intermédiaires ($M_{k+1}$, ..., $M_1$), détermination (120) d'une position différentielle ($x_i$) pour chaque position intermédiaire ($M_{k+1}$, ..., $M_1$) par rapport à la dernière position ($M_0$) et d'une incertitude ($\varepsilon_{xi}$) associée à cette position différentielle ($x_i$), à partir des mesures de vitesse correspondantes ;
- détermination (130) de la dernière position ($M_0$) à partir des positions différentielles ($x_i$), des mesures de visée ($m_i$) et des incertitudes ($\varepsilon_{xi}$) associées à ces positions différentielles, en utilisant une fonction d'observation ($h$)

prédéterminée.

2. Procédé selon la revendication 1, dans lequel chaque position intermédiaire ($M_{k+1}$, ..., $M_1$) suivante correspond à la position du dispositif mobile (12) à l'instant retardé d'une même valeur d'échantillonnage ($\delta$) par rapport à l'instant correspondant à la position intermédiaire ($M_{k+1}$, ..., $M_1$) précédente.

3. Procédé selon l'une quelconque des revendications précédentes, dans lequel chaque position différentielle ($x_i$) est déterminée en appliquant un filtre de Kalman de façon rétrograde à partir de la dernière position ($M_0$).

4. Procédé selon la revendication 3, dans lequel ledit filtre de Kalman correspond à un modèle de vitesse sensiblement constante utilisant un bruit d'accélération instantanée gaussien centré.

5. Procédé selon l'une quelconque des revendications précédentes, dans lequel, en absence de bruit, la fonction d'observation ($h$) relie chaque position ($M_{k+1}, M_k$, ..., $M_0$) à une valeur théorique de la mesure de visée ($m_i$) dans cette position.

6. Procédé selon l'une quelconque des revendications précédentes, dans lequel la dernière position ($M_0$) est déterminée en appliquant un estimateur du maximum de vraisemblance aux positions différentielles ($x_i$), aux mesures de visée ($m_i$), aux incertitudes ($\varepsilon_{xi}$) associées à ces positions différentielles et à des bruits de mesure ($\varepsilon_{mi}$).

7. Procédé selon l'une quelconque des revendications précédentes, dans lequel chaque mesure de visée ($m_i$) correspond à une mesure de direction d'un amer (14-1, ..., 14-N) ou à une mesure de distance jusqu'à un amer (14-1, ..., 14-N) à partir du dispositif mobile (12).

8. Produit programme d'ordinateur comportant des instructions logicielles qui, lorsque mises en oeuvre par un équipement informatique, mettent en oeuvre le procédé selon l'une quelconque des revendications précédentes.

9. Dispositif de recalage (10) sur une pluralité d'amers (14-1, ..., 14-N) lors de la géolocalisation d'un dispositif mobile (12), comprenant des moyens techniques (21, 22, 23) adaptés pour mettre en oeuvre le procédé selon l'une quelconque des revendications 1 à 7.

**Patentansprüche**

1. Verfahren zur Aktualisierung an einer Vielzahl von Landmarken (14-1, ..., 14-N) bei der Geolokalisierung eines mobilen Geräts (12), das sich entlang einer Vielzahl von Positionen ($M_{k+1}, M_k, ..., M_0$) bewegt, wobei die Vielzahl von Positionen ($M_{k+1}, M_k, ..., M_0$) eine Vielzahl von Zwischenpositionen ($M_{k+1}, ..., M_1$) umfasst, wobei das Verfahren die folgenden Schritte umfasst:

   - in jeder Zwischenposition ($M_{k+1}, ..., M_1$) des mobilen Geräts (12), Erfassen (110) von mindestens einer Zielmessung ($m_i$) bezüglich einer der Landmarken (14-1, ..., 14-N) und einer Geschwindigkeitsmessung des mobilen Geräts (12) in dieser Position;
   - in einer Position, der sogenannten letzten Position ($M_0$), die nach jeder der Zwischenpositionen ($M_{k+1}, ..., M_1$) liegt, Bestimmung (120) einer Differenzposition ($x_i$) für jede Zwischenposition ($M_{k+1}, ..., M_1$) in Bezug auf die letzte Position ($M_0$) und einer Unsicherheit ($\varepsilon_{xi}$), die mit dieser Differenzposition ($x_i$) verbunden ist, aus den entsprechenden Geschwindigkeitsmessungen;
   - Bestimmen (130) der letzten Position ($M_0$) aus den Differenzpositionen ($x_i$), den Zielmessungen ($m_i$) und den Unsicherheiten ($\varepsilon_{xi}$), die mit diesen differentiellen Positionen verbunden sind, unter Verwendung einer vorbestimmten Beobachtungsfunktion ($h$).

2. Verfahren nach Anspruch 1, wobei jede folgende Zwischenposition ($M_{k+1}, ..., M_1$) der Position des mobilen Geräts (12) zu dem Zeitpunkt entspricht, der um einen gleichen Abtastwert ($\delta$) gegenüber dem Zeitpunkt verzögert ist, der der vorhergehenden Zwischenposition ($M_{k+1}, ..., M_1$) entspricht.

3. Verfahren nach einem der vorhergehenden Ansprüche, bei dem jede Differenzposition ($x_i$) durch Anwendung eines Kalman-Filters rückwärts von der letzten Position ($M_0$) aus bestimmt wird.

4. Verfahren nach Anspruch 3, wobei der Kalman-Filter einem Modell für eine im Wesentlichen konstante Geschwindigkeit entspricht, das ein zentriertes Gaußsches Momentanbeschleunigungsrauschen verwendet.

5. Verfahren nach einem der vorhergehenden Ansprüche, wobei in Abwesenheit von Rauschen die Beobachtungsfunktion (*h*) jede Position ($M_{k+1}, M_k, ..., M_0$) mit einem theoretischen Wert der Zielmessung ($m_i$) an dieser Position verknüpft.

6. Verfahren nach einem der vorhergehenden Ansprüche, bei dem die letzte Position ($M_0$) durch Anwendung eines Maximum-Likelihood-Schätzers auf die Differenzpositionen ($x_i$), die Zielmessungen ($m_i$), die Unsicherheiten ($\varepsilon_{xi}$), die mit diesen Differenzpositionen und Messrauschen ($\varepsilon_{mi}$) verbunden sind, bestimmt wird.

7. Verfahren nach einem der vorhergehenden Ansprüche, wobei jede Zielmessung ($m_i$) einer Richtungsmessung zu einer Landmarke (14- 1, ..., 14-N) oder einer Entfernungsmessung bis zu einer Landmarke (14-1, ..., 14-N) von dem mobilen Gerät (12) entspricht.

8. Computerprogrammprodukt, umfassend Softwareanweisungen, die, wenn sie von einer Rechenvorrichtung implementiert werden, das Verfahren nach einem der vorherigen Ansprüche implementieren.

9. Vorrichtung (10) zur Aktualisierung an einer Vielzahl von Landmarken (14-1, ..., 14-N) bei der Geolokalisierung eines mobilen Geräts (12), mit technischen Mitteln (21, 22, 23), die zur Durchführung des Verfahrens nach einem der Ansprüche 1 bis 7 geeignet sind.

**Claims**

1. A method of relocating to a multitude of landmarks (14-1, ..., 14-N) when geolocating a mobile device (12) moving along a multitude of positions($M_{k+1}, M_k, ..., M_0$), the multitude of positions ($M_{k+1}, M_k, ..., M_0$) comprising a multitude of intermediate positions ($M_{k+1}, ..., M_1$), the method comprising the following steps:

   - in each intermediate position ($M_{k+1}, ..., M_1$) of the mobile device (12), acquisition (110) of at least one sighting measurement ($m_i$) relative to one of the landmarks (14-1, ..., 14-N) and of a speed measurement of the mobile device (12) in this position;
   - in a position, referred to as the last position ($M_0$), subsequent to each of the intermediate positions ($M_{k+1}, ..., M_1$), determination (120) of a differential position ($x_i$) for each intermediate position ($M_{k+1}, ..., M_1$), relative to the last position ($M_0$), and of an uncertainty ($\varepsilon_{xi}$) associated with this differential position ($x_i$), from the corresponding speed measurements;
   - determination (130) of the last position ($M_0$) from the differential positions ($x_i$), the sighting measurements ($m_i$) and the uncertainties ($\varepsilon_{xi}$) associated with these differential positions, using a predetermined observation function (*h*).

2. A method as claimed in claim 1, wherein each subsequent intermediate position ($M_{k+1}, ..., M_1$) corresponds to the position of the mobile device (12) at the instant delayed by the same sampling value ($\delta$) relative to the instant corresponding to the preceding intermediate position ($M_{k+1}, ..., M_1$).

3. A method according to any one of the preceding claims, in which each differential position ($x_i$) is determined by applying a Kalman filter backwards from the last position ($M_0$).

4. A method as claimed in claim 3, wherein said Kalman filter corresponds to a substantially constant velocity model using centred Gaussian instantaneous acceleration noise.

5. A method according to any one of the preceding claims, in which, in the absence of noise, the observation function (*h*) relates each position ($M_{k+1}, M_k, ..., M_0$) to a theoretical value of the aiming measurement ($m_i$) in this position.

6. A method according to any one of the preceding claims, in which the last position ($M_0$) is determined by applying a maximum likelihood estimator to the differential positions ($x_i$), to the sighting measurements ($m_i$), to the uncertainties ($\varepsilon_{xi}$) associated with these differential positions and to measurement noises ($\varepsilon_{mi}$).

7. A method according to any one of the preceding claims, wherein each sighting measurement ($m_i$) corresponds to a measurement of direction to a landmark (14-1, ..., 14-N) or a measurement of distance to a landmark (14-1, ...,

14-N) from the mobile device (12).

8.  A computer program product comprising software instructions, which, when carried out by a computing device, implement the method according to any one of the preceding claims.

9.  A device (10) for registration on a multitude of landmarks (14-1, ..., 14-N) during the geolocation of a mobile device (12), comprising technical means (21, 22, 23) adapted to implement the method according to any one of claims 1 to 7.

14-2

14-N

14-1

16

12

21

22

10

23

FIG.1

110

120

130

FIG.2

FIG.3

**RÉFÉRENCES CITÉES DANS LA DESCRIPTION**

**Littérature non-brevet citée dans la description**

- **JIAZHEN LU et al.** *Backtracking scheme for single-point self-calibration and rapid in-motion alignment with application to a position and azimuth determining System*